# EUROPEAN PATENT APPLICATION

(11) **EP 3 453 521 A1**
(43) Date of publication of application: **13.03.2019**
(21) Application number: 18192706.2
(22) Date of filing: 05.09.2018
(51) Int. Cl.: B29C 64/277, B29C 64/124

(54) **DIGITAL LIGHT PROCESSING IN THREE-DIMENSIONAL PRINTING SYSTEM AND METHOD FOR IMPROVING THE PRODUCTION RATE OF 3D PRINTING**

(30) Priority: 06.09.2017 US 201715696289
(71) Applicant: Ackuretta Technologies Pvt. Ltd., 11493 Taipei City (TW)
(72) Inventor: Wu, Li-Han, 11493 Taipei City (TW); BAGLA, Ayush Vardhan, 11493 Taipei City (TW)
(74) Representative: Zaboliene, Reda

(57) **Abstract**

A digital light processing system applied in a three-dimensional printing system includes a container set (10) containing solidifiable material (20). A platform set (30) in contact with a portion of the solidifiable material is included, together with a projector(40) emitting a primary electromagnetic radiation. One or more optical component sets (50) are between the projector and the platform. An optical component set can convert the primary electromagnetic radiation into a plurality of secondary electromagnetic radiations, and any of the plurality of secondary electromagnetic radiations can be projected on the solidifiable material contacting the platform set, to form a solid layer. A digital light processing procedure in a three-dimensional printing method is also disclosed.

## Description

### CROSS-REFERENCE TO RELATED APPLICATION

This application claims priority to U.S. non-provisional application No. 15/696,289, filed on September 6th, 2017, which is incorporated herein by reference in its entirety.

### BACKGROUND

### 1. Field

The present disclosure is directed to three-dimensional (3D) printing. More particularly, the present disclosure is directed to a digital light processing (DLP) 3D printing system and method for improving the production rate of 3D printing. 2. Background

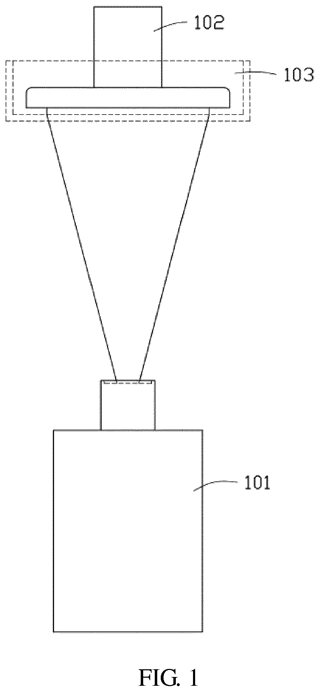

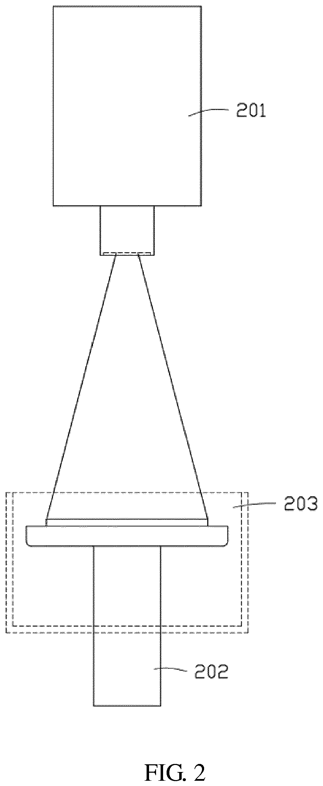

3D printing is an effective technology for accurately forming 3D objects. The 3D printing may be performed by a DLP 3D printing system. The DLP 3D printing system may include a platform, a fluid material vat, and a DLP projector. The DLP projector emits electromagnetic radiation to a photopolymer resin contained in the vat, and the photopolymer resin will be solidified when exposed to electromagnetic radiation, such that a layer of solidified photopolymer is formed on the platform. In general, a DLP printing product is formed from multiple solidified layers. When a layer of photopolymer resin is solidified, the solidified photopolymer is drawn away from the DLP projector by the platform, such that non-solidified photopolymer is refilled. A printing cycle is defined by electromagnetic radiation applied to non-solidified photopolymer and drawing of solidified photopolymer. Conventional DLP 3D printing systems are illustrated in FIG. 1 and FIG. 2. Referring to FIG. 1, a DLP projector 101 can be disposed under a platform 102. The platform 102 ascends with solidified photopolymer while a vat 103 containing the photopolymer remains stationary. Then, the non-solidified photopolymer in the vat 103 is re-filled under the platform 102 for the next printing cycle. Alternatively, as shown in FIG. 2, a DLP projector 201 can be disposed above a platform 202. The platform descends with solidified photopolymer while a vat 203 containing the photopolymer remains stationary. Then, the non-solidified photopolymer in the vat 203 is re-filled for the next printing cycle. The printing cycle is repeated to form multiple solidified layers of photopolymer resin, thus gradually forming a 3D product.

In a conventional DLP 3D printing system, an area of a solidified layer is related to a projected area being projected by an electromagnetic radiation from the DLP projector. A resolution of the projected area is based on the resolution of the DLP projector, and a pixel size of the projected area is based on a pixel size of an image being input into the DLP projector. In other words, the resolution of the DLP projector and the image pixel size pose limitations to the resolution and the pixel size of the projected area. In order to increase the area of the projected area while keeping identical resolution and pixel size, multiple DLP projectors can be installed in the DLP 3D printing system to increase the size of the area of the projected image. Nevertheless, multiple DLP projectors may increase the area of the projected image, but this configuration would substantially increase the cost of the DLP 3D printing system at the same time. It is desirable to increase the area of the projected image without substantially increase the cost of the DLP 3D printing system.

Moreover, a setback of the conventional DLP 3D printing system is its inefficient productivity, because the conventional DLP 3D printing system produce one 3D product at a time. When multiple product prototypes are required, many conventional DLP 3D printing systems may need to work at the same time to produce a desired amount of products. Despite higher production rate is met, it is costly to maintain the operation of multiple DLP 3D printing systems. Therefore, it is desirable to improve the production rate of the DLP 3D printing system without substantially increase the cost.

### SUMMARY

The present disclosure provides a DLP 3D printing system and method for increase the area of the projected area.

The present disclosure provides a DLP 3D printing system and method for improving the production rate of 3D printing.

The present disclosure is directed to a DLP 3D printing system, which includes a container set containing a fluid and solidifiable material, a platform set contacting a portion of the solidifiable material, and a projector emitting a primary electromagnetic radiation. An optical component set is between the projector and the platform. The optical component set may convert the primary electromagnetic radiation into a plurality of secondary electromagnetic radiations, and project the plurality of secondary electromagnetic radiations on the portion of the solidifiable material contacting the platform set, to form a solid layer.

The present disclosure is further directed to a DLP 3D printing method, which includes the emitting, by a projector, of the primary electromagnetic radiation and the converting, by an optical component set, of the primary electromagnetic radiation into a plurality of secondary electromagnetic radiations. The optical component set projects, the plurality of secondary electromagnetic radiations on a portion of a solidifiable material in contact with a platform set to form a solid layer, the solidifiable material being contained in a container set.

### BRIEF DESCRIPTION OF THE DRAWINGS

The present disclosure is illustrated by way of exemplary embodiments and accompanying drawings.
FIG. 1 illustrates a DLP 3D printing system according to the prior art.
FIG. 2 illustrates another DLP 3D printing system according to with the prior art.
FIGs. 3A-3B illustrate DLP 3D printing systems according to an exemplary embodiment of the present disclosure, wherein the projector is disposed under the platform set, and the optical component set includes a mirror with an actuator, thus forming an alternating or successive projection. FIG. 3A shows the secondary electromagnetic radiation being projected on a first platform, and FIG. 3B shows the secondary electromagnetic radiation being projected on a second platform.
FIGs. 3C-3D illustrate a DLP 3D printing system according to an exemplary embodiment of the present disclosure, wherein the projector is disposed above the platform set, and the optical component set includes a mirror with an actuator, thus enabling a successive projection. FIG. 3C shows the secondary electromagnetic radiation being projected on the first platform, and FIG. 3D shows the secondary electromagnetic radiation being projected on the second platform.
FIG. 4 illustrates the successive projections shown in FIGs. 3A-D being successively projected on multiple platforms.
FIG. 5A-5B illustrates the successive projections shown in FIGs. 3A-D being successively projected on the same platform, according to an exemplary embodiment of the present disclosure. FIG 5A shows the secondary electromagnetic radiation being projected on a first area on the platform, and FIG. 5B shows the secondary electromagnetic radiation being projected on a second area on the platform afterwards.
FIG. 6 illustrates a comparison of print cycles between a conventional DLP 3D printing system and the DLP 3D printing system shown in FIGs. 3A-3D.
FIG. 7 illustrates a DLP 3D printing system according to another exemplary embodiment of the present disclosure, wherein the optical component set includes a beam splitter, thus forming a simultaneous projection along a second or alternative optical path.
FIG. 8 illustrates the simultaneous projection shown in FIG 7 being performed on the same platform.

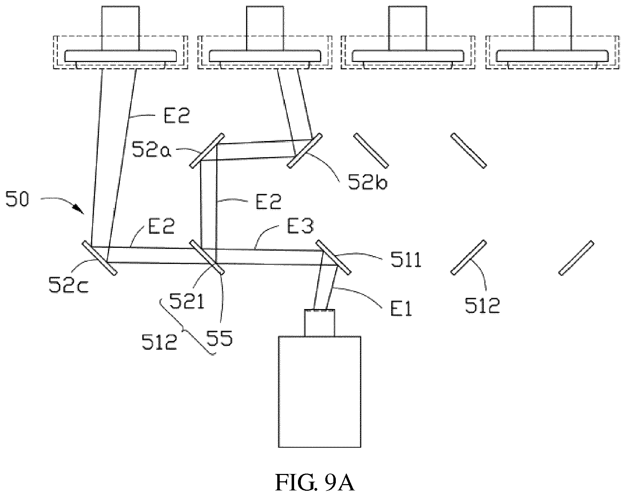

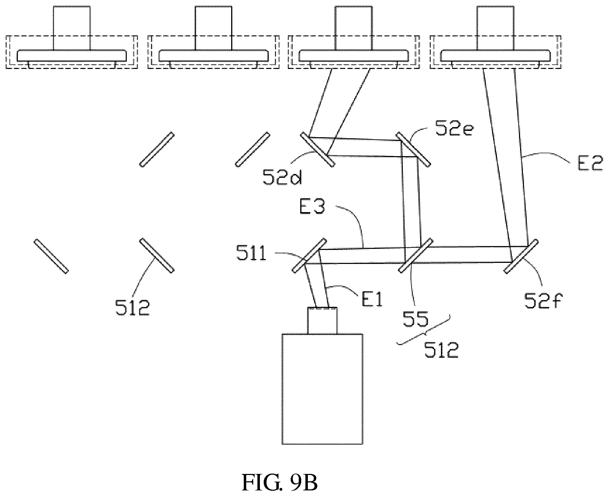

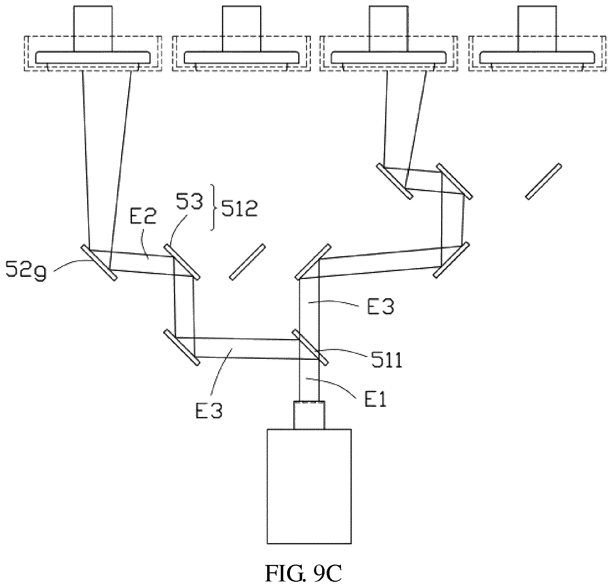

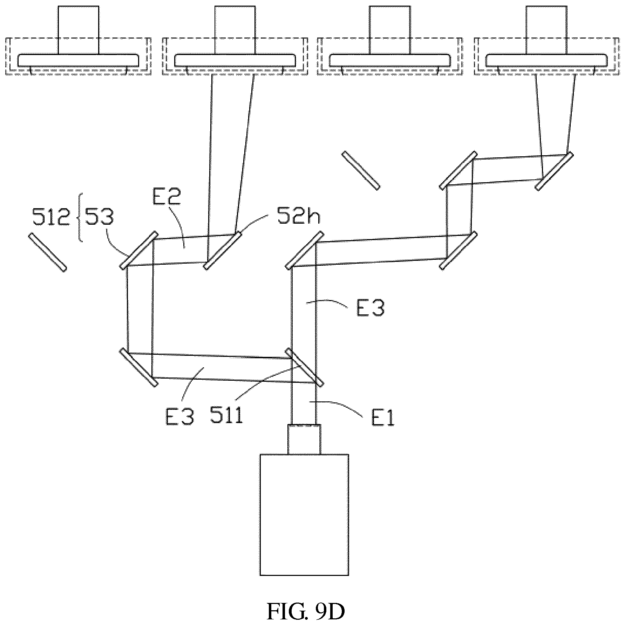

FIGs. 9A-9D illustrate a DLP 3D printing system according to yet another exemplary embodiment of the present disclosure, wherein the optical component set includes a mirror with an actuator and a beam splitter. FIG. 9A shows the mirror in a first state converting the primary electromagnetic radiation (PRad) into a first intermediate electromagnetic radiation (IRad1), followed by a first beam splitter splitting the IRadlinto two secondary electromagnetic radiations. FIG. 9B shows the mirror in a second state converting the primary electromagnetic radiation into a second intermediate electromagnetic radiation (IRad 2), followed by a second beam splitter splitting the IRad2 into two secondary electromagnetic radiations. FIG. 9C shows the beam splitter splitting the PRad into an IRad1 and an IRad2, followed by a first mirror in a first state converting the first intermediate electromagnetic radiation into a first secondary electromagnetic radiation (SRad1) and a second mirror in a first state converting the second intermediate electromagnetic radiation into a second secondary electromagnetic radiation (SRad2). FIG. 9D shows the beam splitter splitting the primary electromagnetic radiation into a first intermediate electromagnetic radiation and a second intermediate radiation, followed by a first mirror in a second state converting the first intermediate electromagnetic radiation into a third secondary electromagnetic radiation (SRad3) and a second mirror in a second state converting the second intermediate electromagnetic radiation into a fourth secondary electromagnetic radiation (SRad4).
FIG. 10 illustrates a DLP 3D printing method according to an exemplary embodiment of the present disclosure.
FIG. 11 illustrates another DLP 3D printing method according to an exemplary embodiment of the present disclosure.

### DETAILED DESCRIPTION

The following exemplary embodiments provide a better understanding of the present disclosure. However, it should be understood that the present disclosure could be practiced even without these details. In some exemplary embodiments, well-known structures and functions are not illustrated or not described in detail. In the present disclosure, terms such as "including" and "comprising" have an inclusive meaning instead of an exclusive or exhaustive meaning, i.e., it means "including but not limited to" unless specifically described otherwise in the context. Singular or plural terms each include both the plural and singular.

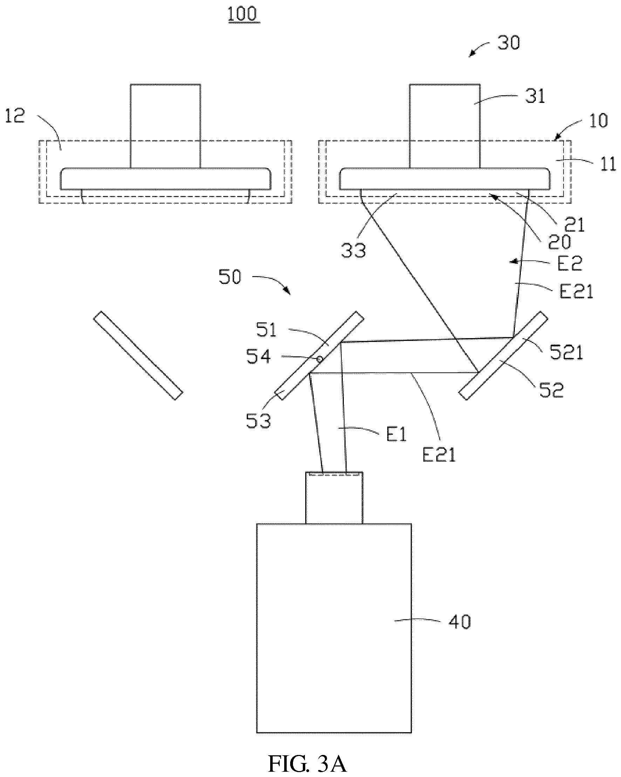

FIGs. 3A-3D illustrate a DLP 3D printing system 100 according to an exemplary embodiment of the present disclosure. As shown in FIG. 3A-3D, the system 100 include a container set 10 containing a solidifiable material 20; a platform set 30 contacting a portion of the solidifiable material 20; a projector 40 emitting a primary electromagnetic radiation E1; and an optical component set 50 between the projector 40 and the platform 30. The optical component set 50 may convert the primary electromagnetic radiation E1 into a plurality of secondary electromagnetic radiations E21 and E22, and project the plurality of secondary electromagnetic radiations E21 and E22 on the portion of the solidifiable material contacting the platform set 30, to form a solidified layer.

Throughout the disclosure, when an element name is followed by the term "set", it means that the number of elements in the set may be more than one. For example, in the example shown in FIGs. 3A-3B, a container set 10 may include two containers, and a platform set 30 may include two platforms. The term "project" refers to a reflection, refraction, and/or transmission of an electromagnetic radiation by an element, and the element is not in a gaseous form. In an embodiment, the container 10 may be a vat. The first vat 11 may contain a first solidifiable material 21 which is transparent to a first secondary electromagnetic radiation E21 partially or entirely. The second vat 12 may be configured to contain a second solidifiable material 22 which is transparent to a second secondary electromagnetic radiation E22 partially or entirely. The first platform 31 may be configured to provide support to a first solidified object. The first solid layer may be formed from the first solidifiable material 21 exposed to the first secondary electromagnetic radiation E21. The second platform 32 may provide support to a second solidifiable material. The second layer may be formed from the second solidifiable material exposed to the second secondary electromagnetic radiation E22. The solidifiable material may be a photopolymer resin. The electromagnetic radiation E1 emitted by the projector 40 may be UV (Ultraviolet), or other visible light. For example, the visible light may have a wavelength of 405 nm.

Referring again to FIGs. 3A-3B, the optical component set 50 may include a primary optical component 51, and a plurality of secondary optical component sets 52. The primary optical component 51 receives the primary electromagnetic radiation E1 directly from the projector 40, and may convert the primary electromagnetic radiation E1 into the plurality of secondary electromagnetic radiations E21 or E22, and project each of the plurality of secondary electromagnetic radiations E21 or E22 on one of the plurality of secondary optical component sets 52. Each of the plurality of secondary optical component sets 52 may project a secondary electromagnetic radiation E21 or E22 on an area 33 on the platform set 30.

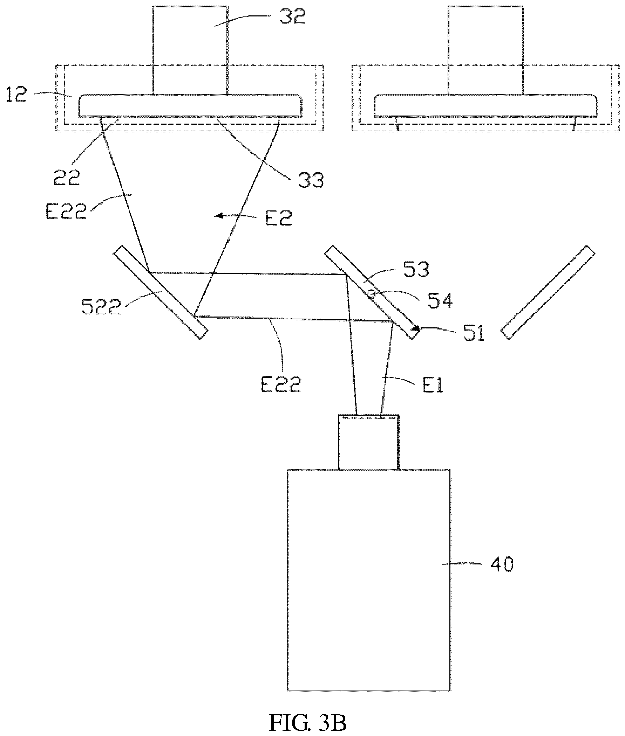

In the embodiment as shown in FIGs. 3A-3B, the primary optical component 51 may include a mirror 53, and the mirror 53 can be interchangeable into a plurality of states. When the mirror 53 is in one particular state among the plurality of states, the mirror 53 may convert the primary electromagnetic radiation E1 into one of the plurality of secondary electromagnetic radiations E21 and E22. Referring to FIG. 3A, when in a first state, the mirror 53 may convert the primary electromagnetic radiation E1 into a first secondary electromagnetic radiation E21 to be projected on the first secondary optical component set 521. Referring to FIG. 3B, when in a second state, the mirror 53 may convert the primary electromagnetic radiation E1 into a second secondary electromagnetic radiation E22 to be projected on the second secondary optical component set 522. In the embodiment, the first secondary optical component set 521 and the second secondary optical component set 522 include one secondary optical component, respectively.

The mirror 53 is adjusted by an actuator (actuator 54) coupled to the mirror. The mirror 53 and the actuator 54 may be an integrated component, or two standalone components. The actuator 54 may control the mirror 53 to rotate, thus enabling the plurality of states. The first secondary electromagnetic radiation E21 is generated when the mirror 53 is in a first state, and the second secondary electromagnetic radiation E22 is generated when the mirror 53 is in a second state. Since the mirror 53 is in one particular state among the plurality of states and that particular state is then succeeded by another state, wherein each of the plurality of secondary electromagnetic radiations E2 is successively generated. That is, the mirror 53 has a plurality of states, in order to generate "successive projections". The mirror 53 may be firstly in the first state to generate the first secondary electromagnetic radiation E21, and then being switched to the second state to generate the second secondary electromagnetic radiation E22. The plurality of states of the mirror 53 refer to different directions which the reflective surface of the mirror 53 are facing, or the different angles of the normal line of the reflective surface of the mirror 53. The angles of the normal line of the reflective surface of the mirror 53 can be selected from 271° to 359°, or 269° to 181°. Preferably, the angles of the normal line of the reflective surface of the mirror 53 can be 315° or 225°.

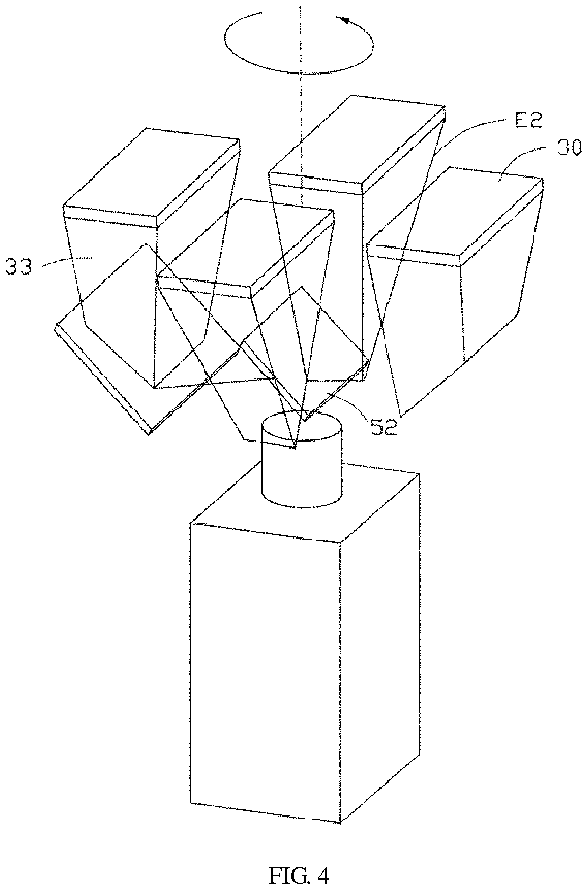

Still referring to FIGs. 3A-3D, the platform set 30 may include a plurality of platforms. For example, FIGs. 3A-3D illustrate two platforms. Despite the illustration in FIGs. 3A-3D, the number of platforms is not limited to two. In another example as shown in FIG. 4, the platform set 30 includes four platforms. The area 33 on which each of the plurality of secondary optical component sets 52 projects the secondary electromagnetic radiation E2 may be located at one of the plurality of platforms. As shown in FIGs. 3A-3D, each of the two secondary optical component sets 52 corresponds one of the two platforms 30 and projects a secondary electromagnetic radiation E2 on an area of the corresponding platform 30.

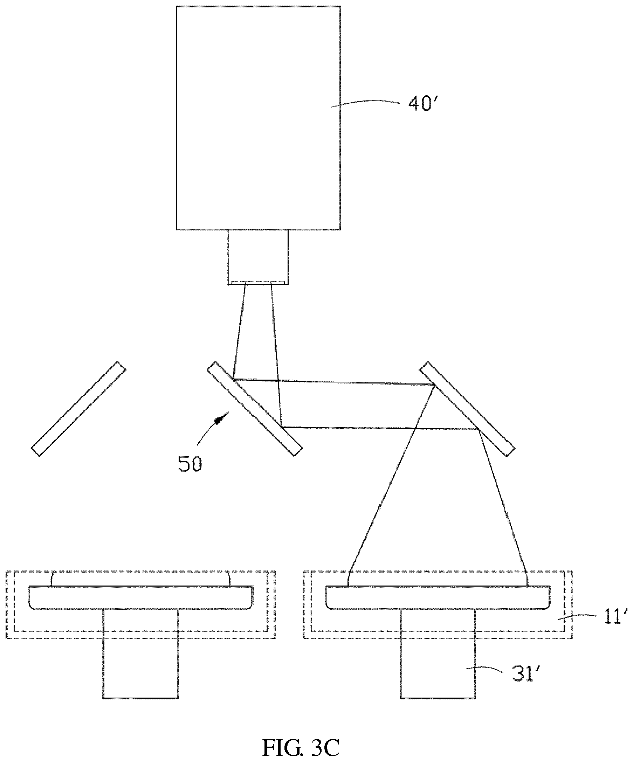

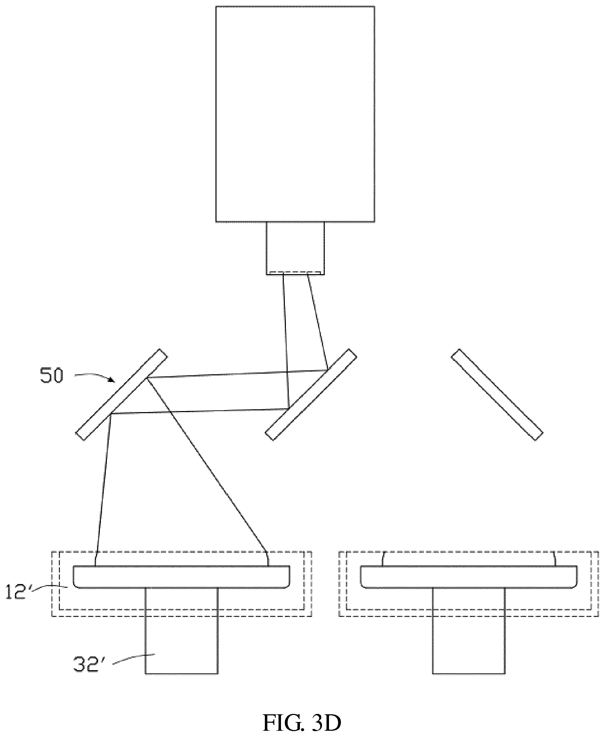

As shown in FIGs. 3A and 3B, the DLP projector 40 may be positioned under the first platforms 31 and second platform 32. The first vat 11 may be positioned between the DLP projector 40 and the first platform 31, and the second vat 12 may be positioned between the DLP projector 40 and the second platform 32. The optical component set 50 may be positioned above the DLP projector 40 and under the first platforms 31 and second platform 32. Alternatively, as shown in FIGs. 3C and 3D, the DLP projector 40' may be positioned above the first platforms 31' and second platform 32', the first vat 11' may be positioned under the first platforms 31', and the second vat 12' may be positioned under the second platform 32'. The optical component set 50 may be positioned under the DLP projector 40' and above the first platforms 31' and second platform 32'.

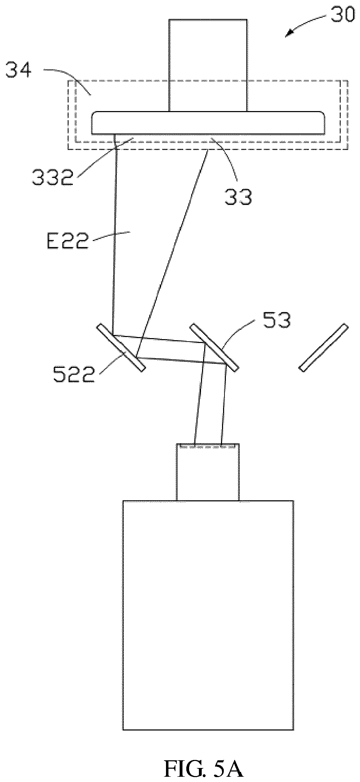

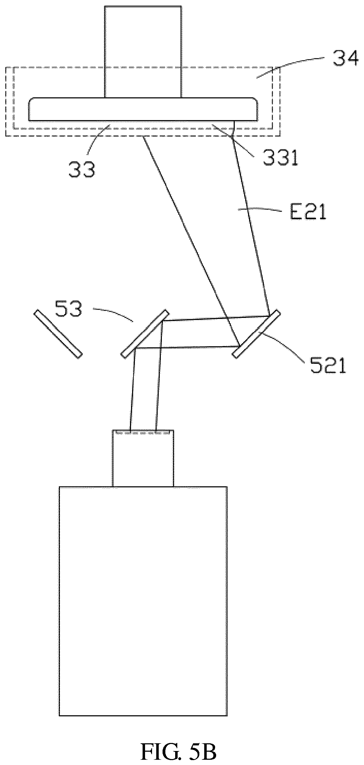

Referring to FIG. 5A-5B, the platform set 30 may include a third platform 34. The area 33 is located at the third platform 34. The areas projected by the secondary electromagnetic radiations E21 and E22 are at least partially different. As shown in FIG. 5A, the left secondary optical component set 522 projects a second secondary electromagnetic radiation E22 to a second projected area 332 on the third platform 34, and as shown in FIG 5B, the right secondary component 521 projects a first secondary electromagnetic radiation E21 to a first projected area 331 on the third platform 34. A large projected area may be formed by partially overlapping the first projected area 331 and the second projected area 332, or by positioning the first projected area 331 and the second projected area 332 so as to be adjacent. Alternatively, the first projected area 331 and the second projected area 332 may be separated for curing of two objects on the third platform 34 at once in order to reduce the overall drawing process by drawing two objects at once. The DLP projector 40 may project the first projected area 331 and the second projected area 332 simultaneously to the third platform 34, by the mirror 53.

In the printing process of the DLP 3D printing system, as shown in FIGs. 3A-3B, the primary electromagnetic radiation E1 from the DLP projector 40 is emitted to the optical component set 50. As illustrated in FIG. 3A, Inside the optical component set 50, the primary optical component 51 in the first state converts the primary electromagnetic radiation E1 into a first secondary electromagnetic radiation E2 which is in turn projected to the right secondary optical component 521. The right secondary optical component 521 reflects the first secondary electromagnetic radiation E21 to the first platform 31. A layer of the first solidifiable material 21 in the first vat 11 is cured by the first secondary electromagnetic radiation E21. Therefore, a first solid layer of a first object is formed on the first platform 31. After the first solid layer is formed on the first platform 31, the DLP projector 40 stops emitting the primary electromagnetic radiation E1. The first platform 31 moves away from the DLP projector 40 to a position ready for curing a next layer of the first solidifiable material 21 on top of the first solid layer on the first platform 31. In the meantime, the actuator 54 drives the primary optical component 51 from the first state to the second state. After the primary optical component 51 is driven to the second state, the DLP projector 40 resumes emitting the primary electromagnetic radiation E1 to the optical component set 50. The primary optical component 51 in the second state converts the primary electromagnetic radiation E1 into a second secondary electromagnetic radiation E22 which is in turn projected to the left secondary optical component set 522. The left secondary optical component set 522 reflects the second secondary electromagnetic radiation E22 to the second platform 32. A layer of the second solidifiable material 22 in the second vat 12 is cured by the second secondary electromagnetic radiation E22. Therefore, a first solid layer of a second object is formed on the second platform 32. After the first solid layer is formed on the second platform 32, the DLP projector 40 stops emitting the primary electromagnetic radiation E1. The second platform 32 moves away from the DLP projector 40 to a position ready for curing a next layer of the second solidifiable material 22 over the first solid layer on the second platform 32. In the meantime, the actuator 54 drives the primary optical component 51 from the second state back to the first state for the next printing cycle.

In this embodiment, the primary electromagnetic radiation may have multiple image patterns. For example, the DLP projector 40 may project a first image pattern when the primary optical component 51 is in the first state and may project a second image pattern when the primary optical component 51 is in the second state. The first image pattern is then projected to the first platform 31 and the second image pattern is then projected to the second platform 32. The first image pattern on the first platform 31 and the second image pattern on the second platform 32 can be identical or different.

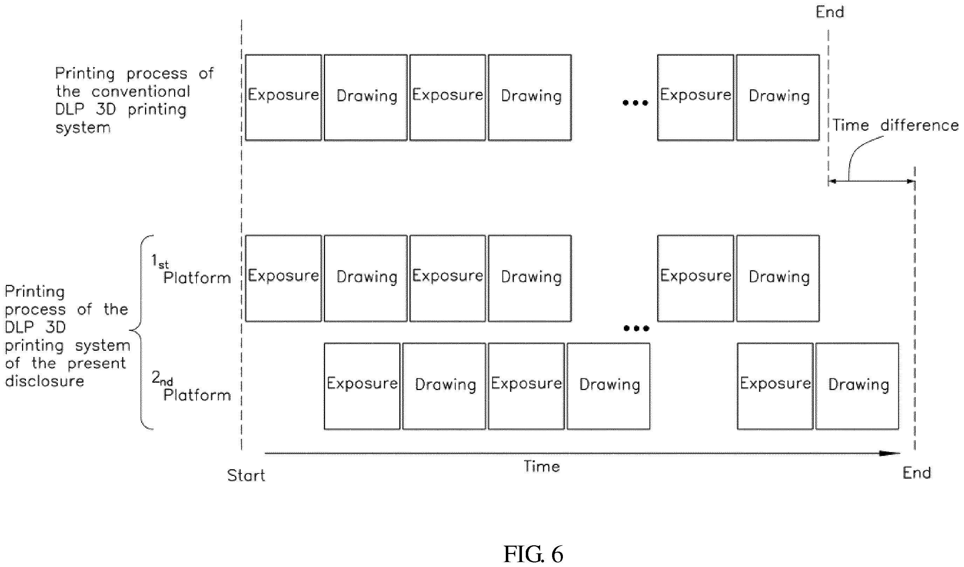

Referring to FIG. 6, a conventional DLP 3D printing system employing a DLP projector without the optical component set is compared with the DLP 3D printing system of the embodiments the present disclosure. A printing process of the conventional DLP 3D printing system is to produce a single solid object on a single platform (multiple cycles each having an exposure process and a drawing process), while the printing process of the DLP 3D printing system as shown in FIGs. 3A-3D is to produce a first solid object on the first platform and a second solid object on the second platform. As illustrated in FIG. 6, the first solid object is firstly completed on the first platform. That is, the printing process of the first solid object is in the exposure process of the first cycle. At the end of the first cycle of the first solid object, the printing process of the second solidified object begins. That is, the printing process of the first solid object is in the drawing process, while the printing process of the second solid object is in the exposure process. FIG. 6 shows that the duration of the printing process of the DLP 3D printing system is slightly longer than the printing process of the conventional DLP 3D printing system (the printing process of the second solid object will finish later than that of the first solid object). However, the DLP 3D printing system 100 shown in FIGs. 3A-D can produce twice as many solid objects than the conventional DLP 3D printing system. In other words, the DLP 3D printing system increases the production rate and integrates the two printing processes of the conventional DLP 3D printing system into one printing process by using the optical component set or sets for overlapping the exposure process of the second solid object on the second platform and the drawing process of the first solid object on the first platform.

The optical component set 50 applied to the primary electromagnetic radiation E1 emitted by the DLP projector 40 can be converted into a plurality of secondary electromagnetic radiations E2, as illustrated in FIG. 3A. The radiations E2 can be projected to multiple platforms 30, as illustrated in FIG. 4. The actuator 54 can rotate the primary optical component 51 through multiple states to generate the plurality of secondary electromagnetic radiations E2, as illustrated in FIG. 3A. Furthermore, image patterns formed by the plurality of secondary electromagnetic radiations E2 are at least partially different from each other.

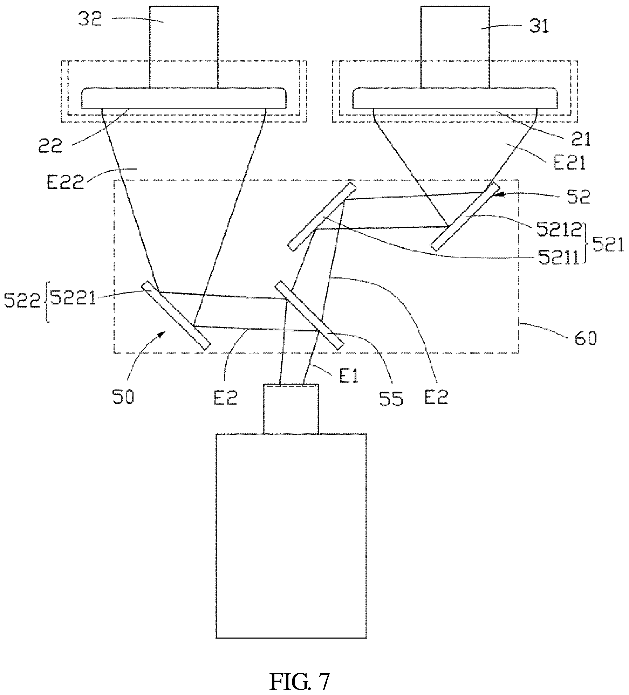

With reference to FIG. 7, the DLP 3D printing system 100 may further include a supporting frame 60 coupled to the optical component set 50. Each of the plurality of secondary optical component sets 52 may be a mirror. In some embodiments, any connections between components, such as the actuator, the mirrors, and the frame, can be made by one or more interference fit, adhesive, screws, or other manufacturing process or assembly that either fastens components together or makes them in one piece, so the optical component set can move between the first state and the second state securely and stably.

With reference to FIG. 7, the primary optical component 50 may include a beam splitter 55. The beam splitter 55 may split the primary electromagnetic radiation E1 into the plurality of secondary electromagnetic radiations. Each one of the plurality of secondary electromagnetic radiations can be projected on one of the plurality of secondary optical component sets 52.

As shown in FIG. 7, the primary electromagnetic radiation from the DLP projector 40 may be emitted to the beam splitter 55. The beam splitter 55 may split the primary electromagnetic radiation E1 into a first secondary electromagnetic radiation E21 and a second secondary electromagnetic radiation E22. The first secondary electromagnetic radiation E21 is guided to the right secondary optical component set 521. In this embodiment, the right secondary optical component set 521 may include two secondary optical components. The first right secondary optical components 5211 reflects the first secondary electromagnetic radiation E21 to the second right secondary optical components 5212, and then the second right secondary optical components 5212 reflects the first secondary electromagnetic radiation E21 to the first platform 31. In the same period that the first secondary electromagnetic radiation E21 being projected from component set 521 to the first platform 31, the second secondary electromagnetic radiation E22 is guided to the left secondary optical component set 522. The left secondary optical component set 522 then reflects the second secondary electromagnetic radiation E22 to the second platform 32. In this embodiment, the left secondary optical component set 522 may include a first left secondary optical component set 5221. As shown in FIG. 7, the first secondary electromagnetic radiation E21 and the primary electromagnetic radiation E1 travel a first optical path from the projector 40 to the first platform 31, and the second secondary electromagnetic radiation E22 and the primary electromagnetic radiation E1 travel a second optical path from the projector 40 to the second platform 32. Although the routes of the first and second optical paths are different, their lengths are identical. The first solidifiable material 21 and second solidifiable material 22 are cured at the same time. In other words, a first solid layer on the first platform 31 and a first solid layer on the second platform 32 are formed simultaneously. After the first solid layer are formed on the platforms 31 and 32, the DLP projector 40 stops emitting the primary electromagnetic radiation E1. The first platform 31 and second platforms 32 move away from the DLP projector 40 to be in position for the next printing cycle.

The primary electromagnetic radiation E1 emitted by the DLP projector 40 can be finally projected to the first platform 31 and second platforms 32 simultaneously because the beam splitter 55 splits the primary electromagnetic radiation E1 into the first secondary electromagnetic radiation E21 and the second secondary electromagnetic radiation E22. That is, the beam splitter 55 may generate "simultaneous projections". Each of the first secondary electromagnetic radiation E21 and the second secondary electromagnetic radiation E22 contains half of the energy of the primary electromagnetic radiation E1. To maintain the amount of energy received by the first solidifiable material 21 and the second solidifiable material 22, the printing cycle must extend the time required by the exposure process. Alternatively, a DLP projector with two times the amount of energy can be used to achieve identical printing efficiency without extending the exposure process.

In the embodiment illustrated in FIG. 7, the DLP projector 40 may project the image pattern simultaneously to the first platform 31 and second platforms 32 by the beam splitter 55, and the image patterns on the first platform 31 and on the second platform 32 may be identical.

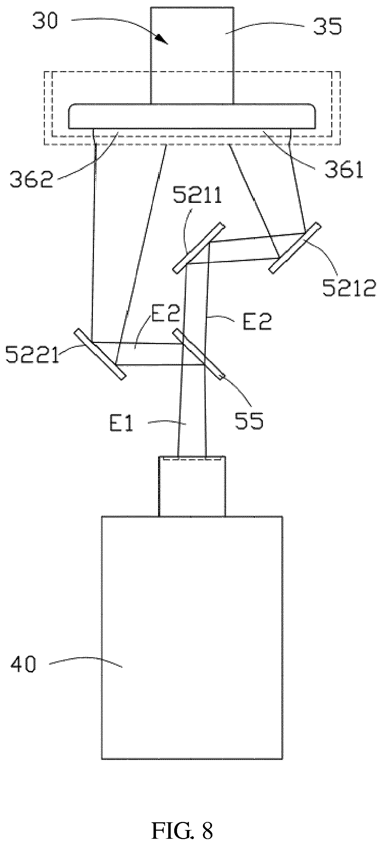

Alternatively, as shown in FIG. 8, the platform set 30 may include a fourth platform 35. The primary electromagnetic radiation E1 is split to form two secondary electromagnetic radiations E2 by the beam splitter 55. The first right secondary optical component 5211 and the second right secondary optical component 5212 reflect the first secondary electromagnetic radiation E2 to a first area 361 on the platform 35, and the first secondary optical component 5221 reflects the second secondary electromagnetic radiation E2 to a second area 362 on the platform. The DLP projector 40 may project onto the first area 361 and the second area 362 simultaneously to the fourth platform 35 because of the beam splitter 55. With the combination of the beam splitter 55 and the optical components 5211, 5212, and 5221, the projected area on a solidified layer being projected by the DLP projector is larger in FIG. 8 when comparing with conventional one-DLP-projector 3D printing systems. The DLP 3D printing system in FIG. 8 did not significantly increase the cost, but it generates larger projected areas.

Referring to FIGs. 9A-9B, the optical component set 50 may include a first-type primary optical component 511, a plurality of second-type primary optical component sets 512, and a secondary optical component sets 52 comprising secondary optical component 52a, 52b, and 52c. The first-type primary optical component 511 receives the primary electromagnetic radiation E1 directly from the projector, and may convert the primary electromagnetic radiation E1 into a plurality of intermediate electromagnetic radiations E3, and project each of the plurality of intermediate electromagnetic radiations E3 on one of the plurality of second-type primary optical component set 512. Each of the plurality of second-type primary optical component set 512 receives the intermediate radiations E3 from the first-type primary optical component 511, and may convert an intermediate electromagnetic radiation E3 into a subset of the plurality of secondary electromagnetic radiations E2. Such subset may include multiple secondary electromagnetic radiations. Each second-type primary optical component set 512 may project any of the subset as a secondary electromagnetic radiation on one of the secondary optical component 52a, 52b, or 52c. Each of the plurality of secondary optical component 52a. 52b, or 52c may reflect a secondary electromagnetic radiation E2 on an area on a platform set.

The first-type primary optical component 511 may include a mirror which can be adjusted to be in a plurality of states. FIG. 9A shows the mirror in a first state and FIG. 9B shows the mirror in a second state. When the mirror is in one particular state among the plurality of states, the mirror may convert the primary electromagnetic radiation E1 into one of the plurality of intermediate electromagnetic radiations E3, and the intermediate electromagnetic radiation E3 can be projected on one second-type primary optical component set 521 of the plurality of sets 512. Each second-type primary optical component set 512 may include a beam splitter 55. The beam splitter 55 may split the intermediate electromagnetic radiation E3 into multiple secondary electromagnetic radiations E2 among the subset, each secondary electromagnetic radiation E2 of the subset being projected on one secondary optical component 52a, 52b, or 52c in the secondary optical component set 52. The plurality of states of the mirror in the first-type primary optical component 511 refer to different directions which the reflective surface of the mirror in the first-type primary optical component 511 are facing, or the different angles of the normal line of the reflective surface of the mirror in the first-type primary optical component 511. The angles of the normal line of the reflective surface of the mirror in the first-type primary optical component 511 can be selected from 271° to 359°, or 269° to 181°. Preferably, the angles of the normal line of the reflective surface of the mirror in the first-type primary optical component 511 can be 315° or 225°.

Alternatively, as shown in FIGs. 9C-9D, the first-type primary optical component set 511 may include a beam splitter. The beam splitter may split the primary electromagnetic radiation E1 into a plurality of intermediate electromagnetic radiations E3. Each of the intermediate electromagnetic radiations E3 can be projected on a second-type primary optical component set 512. The second-type primary optical component 512 may include a mirror 53 adjustable between a plurality of states. FIG 9C shows the mirror 53 in a first state, and FIG. 9D shows the mirror 53 in a second state. When the mirror 53 is in one particular state among the plurality of states, the mirror 53 may convert the intermediate electromagnetic radiation E3 into a secondary electromagnetic radiation E2 of the plurality of secondary electromagnetic radiations E2, the secondary electromagnetic radiation E2 being projected on the secondary optical component sets 52g or 52h among the plurality of sets 52.

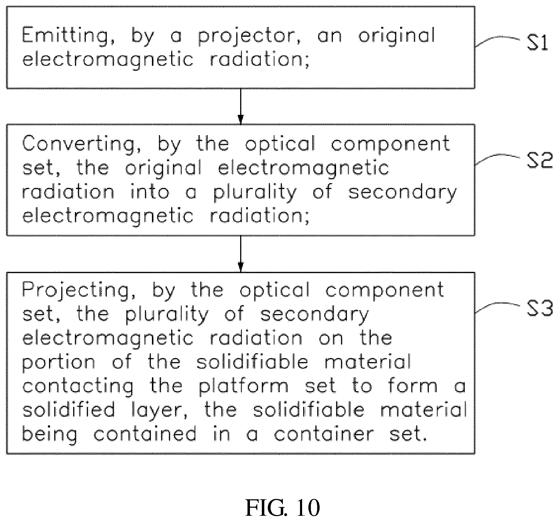

Referring to FIG. 10, a DLP 3D printing method may include the steps of:
S1, emitting, by a projector, a primary electromagnetic radiation;
S2, converting, by the optical component set, the primary electromagnetic radiation into a plurality of secondary electromagnetic radiations; and
S3, projecting, by the optical component set, the plurality of secondary electromagnetic radiations on the portion of the solidifiable material in contact with the platform set to form a solidified layer, the solidifiable material being contained in a container set.

The plurality of secondary electromagnetic radiations may be successively converted by the optical component set. Alternatively, the plurality of secondary electromagnetic radiations may be simultaneously converted by the optical component set.

The plurality of secondary electromagnetic radiations may be projected on the plurality of platforms. Alternatively, the plurality of secondary electromagnetic radiations may be projected on multiple areas on a platform.

Image patterns formed by the plurality of secondary electromagnetic radiations may be at least partially different from each other. Each secondary electromagnetic radiation and the primary electromagnetic radiation form an optical path traveling from the projector to a platform. A length of an optical path is identical to another optical path.

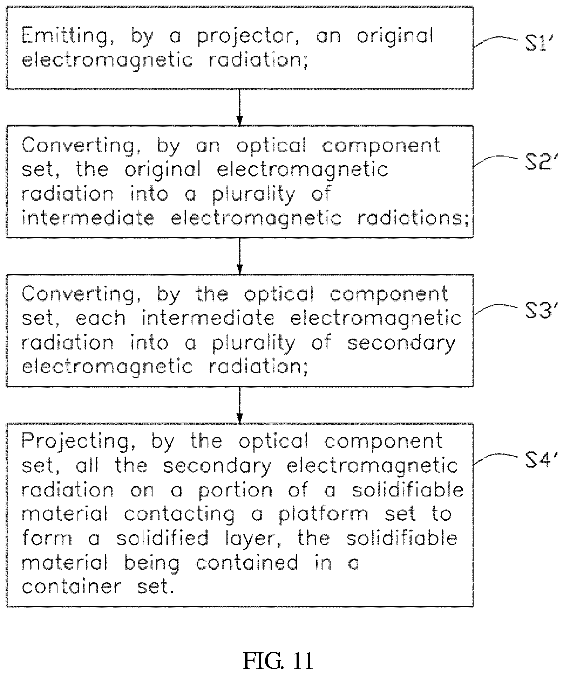

Referring to FIG. 11, a DLP 3D printing method may include the steps of:
S1', emitting, by a projector, a primary electromagnetic radiation;
S2', converting, by an optical component set, the primary electromagnetic radiation into a plurality of intermediate electromagnetic radiations;
S3', converting, by the optical component set, each intermediate electromagnetic radiation into a plurality of secondary electromagnetic radiations; and
S4', projecting, by the optical component set, all the secondary electromagnetic radiations on a portion of a solidifiable material in contact with a platform set to form a solidified layer, the solidifiable material being contained in a container set.

The plurality of intermediate electromagnetic radiations may be simultaneously converted by the optical component set, and the plurality of secondary electromagnetic radiations may be successively converted by the optical component set. Alternatively, the plurality of intermediate electromagnetic radiations may be successively converted by the optical component set, and the plurality of secondary electromagnetic radiations may be simultaneously converted by the optical component set.

All the secondary electromagnetic radiations may be projected on the plurality of platforms. Alternatively, all the secondary electromagnetic radiations may be projected on multiple areas on a platform.

Image patterns formed by all the secondary electromagnetic radiations may at least partially different from each other. Each secondary electromagnetic radiation and the primary electromagnetic radiation form an optical path traveling from the projector to a platform. A length of an optical path is identical to another optical path.

The various embodiments of the present disclosure increase the production speed of DLP 3D printing systems, increase the projected area while maintaining identical resolution and pixel size without the need of an addition projector, and/or reduce the drawing process and increase the exposure time during the printing process.

It is to be further understood that even though numerous characteristics and advantages of the present exemplary embodiments have been set forth in the foregoing description, together with details of the structures and functions of the exemplary embodiments, the disclosure is illustrative only, and changes may be made in details, especially in matters of shape, size, and arrangement of parts within the principles of the disclosure to the full extent indicated by the broad general meaning of the terms in which the appended claims are expressed.

## Claims

1. A digital light processing (DLP) three-dimensional (3D) printing system, comprising:
a container set containing a solidifiable material;
a platform set contacting a portion of the solidifiable material;
a projector emitting a primary electromagnetic radiation; and
an optical component set disposed between the projector and the platform,
wherein the optical component set converts the primary electromagnetic radiation into a plurality of secondary electromagnetic radiations, and projects the plurality of secondary electromagnetic radiations on the portion of the solidifiable material to form a plurality of solidified layers.

2. The DLP 3D printing system of claim 1, wherein the optical component set comprises:
a primary optical component converting the primary electromagnetic radiation into the plurality of secondary electromagnetic radiations; and
a plurality of secondary optical component sets,
wherein the primary optical component projects each of the plurality of secondary electromagnetic radiations on one of the plurality of secondary optical component sets, and
each of the plurality of secondary optical component sets projects one of the secondary electromagnetic radiations on an area on the platform set.

3. The DLP 3D printing system of claim 2, wherein the platform set comprises a plurality of platforms, and
each of the plurality of secondary optical component sets projects one of the secondary electromagnetic radiations on an area on one of the plurality of platforms.

4. The DLP 3D printing system of claim 2, wherein the platform set comprises a platform, each of the plurality of secondary optical component sets projects one of the secondary electromagnetic radiations on a plurality of areas on the platform, and the areas projected by the secondary electromagnetic radiations are at least partially different.

5. The DLP 3D printing system of claim 2, wherein the primary optical component comprises an adjustable mirror and an actuator coupled to the adjustable mirror, wherein the actuator drives the primary optical component from one state to another state within a plurality of states.

6. The DLP 3D printing system of claim 2, wherein the primary optical component comprises a beam splitter, the beam splitter splits the primary electromagnetic radiation into the plurality of secondary electromagnetic radiations, each of the plurality of secondary electromagnetic radiations is projected on one of the plurality of secondary optical component sets.

7. The DLP 3D printing system of claim 1, wherein the optical component set comprises:
a first-type primary optical component converting the primary electromagnetic radiation into a plurality of intermediate electromagnetic radiations;
a plurality of second-type primary optical components, each of the second-type primary optical components converting the intermediate electromagnetic radiation into the plurality of secondary electromagnetic radiations; and
a plurality of secondary optical component sets,
wherein the first-type primary optical component projects each of the plurality of intermediate electromagnetic radiations on one of the plurality of second-type primary optical components, and each of the plurality of second-type primary optical components projects one of the secondary electromagnetic radiationss on one of the plurality of secondary optical component sets, and each of the plurality of secondary optical component sets projects one of the secondary electromagnetic radiations on the platform set.

8. The DLP 3D printing system of claim 7, wherein the platform set comprises a plurality of platforms, and the plurality of secondary optical component sets projects one of the secondary electromagnetic radiations on an area on one of the plurality of platforms.

9. The DLP 3D printing system of claim 7, wherein the platform set comprises a platform, and the plurality of the secondary optical component set projects one of the secondary electromagnetic radiations on an area on the platform, wherein
two of the plurality of the secondary optical components sets projects at least two partially different areas on the platform.

10. The DLP 3D printing system of claim 7, wherein the first-type primary optical component comprises an adjustable mirror with a plurality of states, and each second-type primary optical component comprises a beam splitter splitting one of the intermediate electromagnetic radiations into the plurality of secondary electromagnetic radiations, and each of the secondary electromagnetic radiations is projected on one of the plurality of secondary optical component sets, and
when the adjustable mirror is in one of the plurality of states, the adjustable mirror converts the primary electromagnetic radiation into the intermediate electromagnetic radiation, and the intermediate electromagnetic radiation is projected on one of the plurality of second-type optical component sets.

11. The DLP 3D printing system of claim 7, wherein the first-type primary optical component comprises a beam splitter splitting the primary electromagnetic radiation into the plurality of intermediate electromagnetic radiations, each of the intermediate electromagnetic radiations is projected on one of the plurality of second-type primary optical component sets, and each of the second-type primary optical components comprises a mirror with a plurality of states, and when the mirror is in one of the plurality of states, the mirror converts one of the intermediate electromagnetic radiations into one of the secondary electromagnetic radiations, each of the secondary electromagnetic radiations is projected on one of the plurality of secondary optical component sets.

12. The DLP 3D printing system of claim 7, wherein the first-type primary optical component comprises an adjustable mirror and an actuator coupled to the adjustable mirror, wherein the actuator drives the first-type primary optical component from one state to another state within a plurality of states.

13. The DLP 3D printing system of claim 1, wherein the projector is located under or above the platform set, and after the solidified layer is formed:
the platform set ascends while the container set remains stationary to separate the solidified layer from a non-solidified material in the container set, when the projector is located under the platform set; and
the platform set descends while the container set remains stationary to separate the solidified layer from the non-solidified material in the container set, when the projector is located above the platform set.

14. The DLP 3D printing system of claim 1, wherein image patterns formed by the plurality of secondary electromagnetic radiations are at least partially different from each other.

15. The DLP 3D printing system of claim 1, wherein a length of an optical path formed by one of the secondary electromagnetic radiations and the primary electromagnetic radiation is identical to a length of another optical path formed by another of the secondary electromagnetic radiations and the primary electromagnetic radiation.
